# EUROPEAN PATENT SPECIFICATION

(11) **EP 1 373 953 B1**
(45) Date of publication and mention of the grant of the patent: **22.11.2006**
(21) Application number: 02713339.6
(22) Date of filing: 26.03.2002
(51) Int. Cl.: G02B 6/42

(54) **METHOD AND ARRANGEMENT FOR FIXING OF OPTICAL FIBERS**
VERFAHREN UND ANORDNUNG ZUM FIXIEREN VON LICHTWELLENLEITERN
PROCEDE ET SYSTEME DE FIXATION DE FIBRES

(30) Priority: 05.04.2001 SE 0101238
(43) Date of publication of application: 02.01.2004
(73) Proprietor: TELEFONAKTIEBOLAGET LM ERICSSON (publ), 164 83 Stockholm (SE)
(72) Inventor: ENGSTRAND, Jan- ke, S-142 65 Tr ngsund (SE); MOLL, Hans-Christer, S-124 51 Bandhagen (SE)
(74) Representative: Norin, Klas
(86) International application number: PCT/SE2002/000595
(87) International publication number: WO 2002/082150

(56) References cited:
- EP-A1- 0 061 772
- US-A- 4 765 700

## Description

### TECHNICAL FIELD

The invention relates to a method and an arrangement for alignment and fixing of at least one optical fiber upon connection of the optical fiber to a transmitter and/or receiver in an optical module.

### BACKGROUND OF THE INVENTION

Upon manufacture of optical modules, one of the goals is to achieve a quick fixing of a fiber in front of a transmitter and/or receiver, thereby reducing the time for assembly of the optical module. Prior art includes fastening the fiber in a v-shaped groove wherein glue has been applied followed by a subsequent hardening by heating or UV-light. A problem of this technique is to ensure a quick enough fixing of the fiber while retaining good adhesion to the groove, thus preventing the fiber from moving during post-machining and/or in the finished product.

Document EP 061772 discloses an electro-optical module in which optical fibres are arranged in grooves on an alignment element. A cover plate blocks the fibres in position in front of an emitter on detector and is fixed by clamping means.

### SUMMARY OF THE INVENTION

The object of the invention is to provide a method and an arrangement for a quick and reliable alignment and fixing upon connection of at least one optical fiber to a transmitter and/or receiver in an optical module.

This can be achieved in accordance with the invention by clamping down the fiber, thereby forming a clamped joint, whereby a quick fixing of the fiber is achieved, which is an advantage during optimization of the distance between the end of the fiber and an active surface of the transmitter and/or receiver in the optical module.

Another advantage of a quick alignment and fixing of the fiber is a simplified adaptation of the assembly of optical modules to an automatic assembly line.

The invention will be described more in detail below with reference to the appended drawing.

### BRIEF DESCRIPTION OF THE DRAWING

- Fig. 1 illustrates a side view of an embodiment of the invention with a positioned optical fiber and a v-grooved clamp in a first upper position
- Fig. 2 illustrates a side view of the same embodiment as in Fig. 1 but with the v-grooved clamp depressed into a second lower position with the optical fiber fixated
- Fig. 3 illustrates a view from above of the same embodiment as in Fig. 1 and Fig. 2
- Fig. 4 illustrates a cross-section of the same embodiment as in Fig. 1
- Fig. 5 illustrates a cross-section of the same embodiment as in Fig. 2

### DESCRIPTION OF PREFERRED EMBODIMENTS OF THE INVENTION

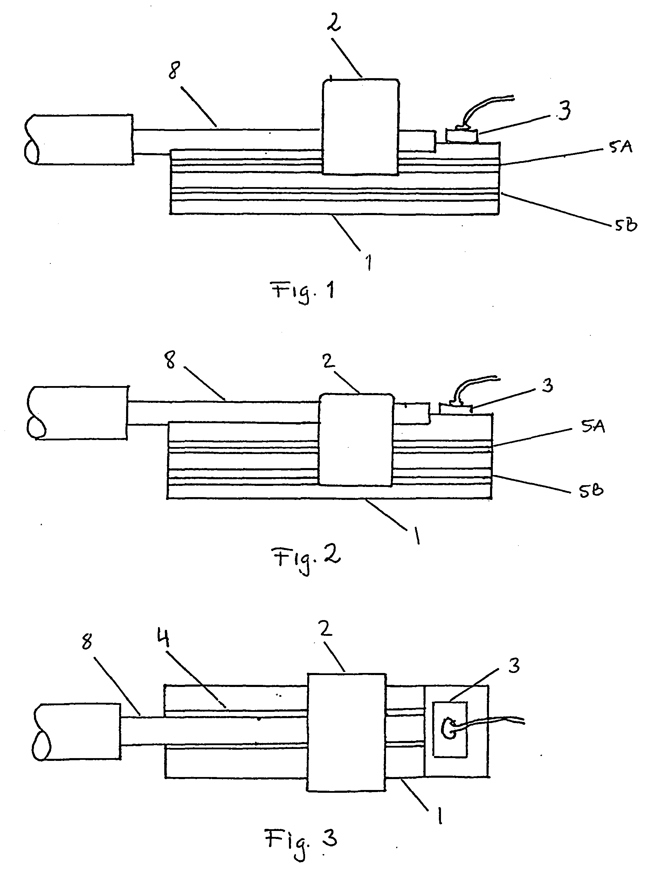

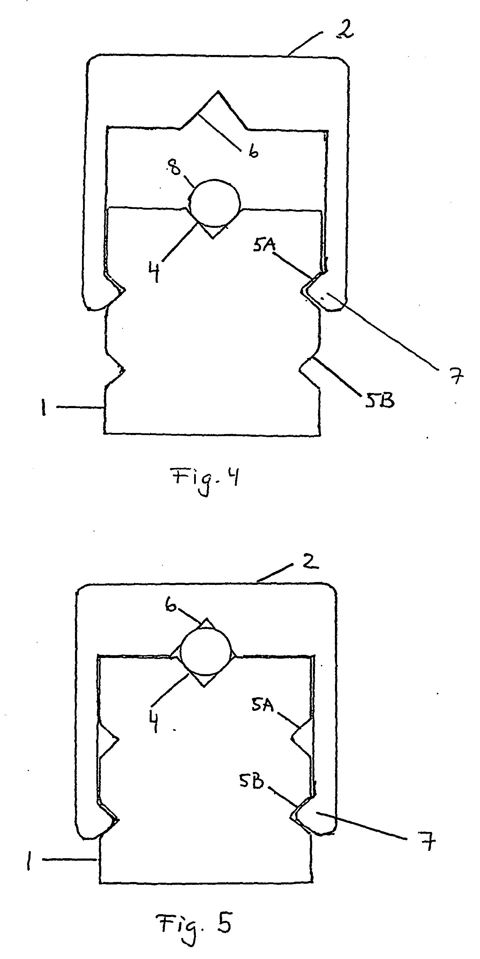

Figs. 1-5 illustrate a preferred embodiment of the invention. The illustrated embodiment includes an alignment element 1 and a clamp 2 in front of a transmitter and/or receiver 3 in an optical module.

The alignment element 1 is provided with a v-shaped groove 4 perpendicular to an active surface of the transmitter and/or receiver 3 in the optical module. Two v-shaped parallel grooves 5A and 5B are arranged on the two sides of the alignment element 1 that are parallel to the v-shaped groove 4 on the top side and perpendicular to the top side.

The upper part of the preferred embodiment is, in accordance with the invention, preferably shaped as a u-shaped clamp 2, which in turn includes an inner v-shaped groove 6 adapted to be directly opposite of the v-shaped groove 4 of the alignment element 1 when the clamp 2 is correctly placed on the alignment element 1 and an on each inner side of the clamp 2 arranged v-shaped ridge 7 is adapted to fit the v-shaped groove 5A or 5B on the alignment element 1, whereby the v-shaped grooves 5A and 5B together with the ridges 7 act as fastening means for fastening the clamp 2 to the alignment element 1.

The fastening means of the clamp and of the alignment element of the described embodiment are shown as v-shaped ridges and v-shaped grooves respectively. It is implied that the fastening means also can take other shapes i.e. rounded ridges and grooves, serrated ridges and grooves and combinations thereof. It is furthermore implied that the fastening means can be arranged in such a manner that the clamp includes grooves and the alignment element includes ridges or both.

Upon alignment and fixing of an optical fiber 8 in the preferred embodiment, in accordance with the invention, the peeled optical fiber 8 is positioned in the v-shaped groove 4 on the alignment element 1 in the optical module. The clamp 2 is placed over of the fiber 8 on the alignment element 1 and depressed and fastened with its v-shaped ridges 7 in the first upper v-shaped grooves 5A.

The fiber 8 is still movable in the direction of the v-shaped groove 4 on the alignment element 1, i.e. perpendicular to the active surface of the optical module.

Subsequently the distance between the fiber end of the peeled optical fiber 8 and the active surface of the optical module is optimized.

The clamp 2 is then depressed further in such a manner that it reaches and is fastened with its v-shaped ridges 7 in the second lower v-grooves 5B of the alignment element 1, whereby the fiber 8 is aligned and fixated on the alignment element 1.

In a mechanical joint, in accordance with the invention, both the top and bottom part can be made of the same elastic material or for some applications one part can be made of a hard material. In both cases the arrangement prevents the fibers from moving during clamping, i.e. during alignment in front of a laser where the core of the fiber only is a few microns in diameter.

The invention can relate to applications for both one and several optical fibers.

The invention is obviously not limited to the above described and on the drawings illustrated embodiments, but can be modified within the limits of the appended claims.

## Claims

1. A method for alignment and fixing of at least one optical fiber in front of a transmitter and/or receiver in an optical module, **characterized by** the following steps:
- placing and aligning an optical fiber (8) in a groove (4) on an alignment element (1) in an optical module,
- positioning a clamp (2) on top of the optical fiber on the alignment element,
- depressing the clamp to engagement in a first fastening means on the alignment element,
- optimizing the distance between the fiber end and a transmitter and/or receiver of the optical module, and
- continued depression of the clamp to engagement in a second fastening means on the alignment element to fixate the optical fiber in the groove on the alignment element.

2. An arrangement for alignment and fixing of at least one optical fiber in front of a transmitter and/or receiver in an optical module comprising a u-shaped clamp (2) and an alignment element (1), **characterized in that** the u-shaped clamp (2) includes at least one fastening means (7) arranged in pairs on each end of the clamp; that the alignment element (1) includes at least one groove (4) for an optical fiber (8) arranged on the top side and at least two fastening means (5A, 5B) corresponding to the fastening means (7) arranged on the clamp (2) sides of the alignment element (1) for fastening the clamp in two different positions.

3. An arrangement according to claim 2, **characterized in that** said groove (4) is v-shaped.

4. An arrangement according to claim 2, **characterized in that** the clamp (2) includes a groove (6) for an optical fiber (8) which is directly opposite of the groove (4) arranged on the alignment element (1) when the clamp (2) is placed on the alignment element (1).

5. An arrangement according to claim 3, **characterized in that** said grooves (4, 6) are v-shaped.

6. An arrangement according to claim 2, **characterized in that** the fastening means (5) of the alignment element (1) are shaped as v-shaped grooves and that the fastening means (7) of the clamp (2) are shaped as ridges.

7. An arrangement according to claim 2, **characterized in that** the fastening means of the alignment element (1) are shaped as ridges and the fastening means of the clamp (2) are shaped as v-shaped grooves.

## Patentansprüche

1. Verfahren zum Ausrichten und Befestigen von zumindest einer optischen Faser vor einem Sender und/oder Empfänger in einem optischen Modul, **gekennzeichnet durch** die folgenden Schritte:
- Platzieren und Ausrichten einer optischen Faser (8) in eine Rille (4) auf einem Ausrichtungselement (1) in einem optischen Modul,
- Positionieren einer Klammer (2) oben auf der optischen Faser auf dem Ausrichtungselement,
- Herabdrücken der Klammer zur Bindung in einer ersten Befestigungsvorrichtung auf dem Ausrichtungselement,
- Optimieren der Entfernung zwischen dem Faserende und einem Sender und/oder Empfänger des optischen Moduls, und
- kontinuierliches Herabdrücken der Klammer zur Bindung in einer zweiten Befestigungsvorrichtung auf dem Ausrichtungselement, um die optische Faser in der Rille auf dem Ausrichtungselement zu fixieren.

2. Anordnung zum Ausrichten und Fixieren von zumindest einer optischen Faser vor einem Sender und/oder Empfänger in einem optischen Modul (1) mit einer u-förmigen Klammer (2) und einem Ausrichtungselement (1), **dadurch gekennzeichnet, dass** die u-förmige Klammer (2) zumindest eine Befestigungsvorrichtung (7) umfasst, die in Paaren auf jedem Ende der Klammer angeordnet ist; dass das Ausrichtungselement (1) zumindest eine Rille (4) für eine optische Faser (8) umfasst, die auf der Oberseite angeordnet ist, und zumindest zwei Befestigungsvorrichtungen (5A, 5B), die den Befestigungsvorrichtungen (7) entsprechen, die auf den Seiten der Klammer (2) des Ausrichtungselementes (1) zum Befestigen der Klammer in zwei verschiedenen Positionen angeordnet sind.

3. Anordnung nach Anspruch 2, **dadurch gekennzeichnet, dass** die Rille (4) v-förmig ist.

4. Anordnung nach Anspruch 2, **dadurch gekennzeichnet, dass** die Klammer (2) eine Rille (6) für eine optische Faser (8) umfasst, die direkt entgegengesetzt der Rille (4) ist, die auf dem Ausrichtungselement (1) angeordnet ist, wenn die Klammer (2) auf dem Ausrichtungselement (1) platziert wird.

5. Anordnung nach Anspruch 3, **dadurch gekennzeichnet, dass** die Rillen (4, 6) v-förmig sind.

6. Anordnung nach Anspruch 2, **dadurch gekennzeichnet, dass** die Befestigungsvorrichtung (5) des Ausrichtungselementes (1) als v-förmige Rillen geformt sind und dass die Befestigungsvorrichtung (7) der Klammer (2) als Grate geformt sind.

7. Anordnung nach Anspruch 2, **gekennzeichnet dadurch, dass** die Befestigungsvorrichtung des Ausrichtungselementes (1) als Grate geformt sind und die Befestigungsvorrichtung der Klammer (2) als v-förmige Rillen geformt sind.

## Revendications

1. Procédé d'alignement et de fixation d'au moins une fibre optique devant un émetteur et/ou récepteur dans un module optique, **caractérisé par** les étapes qui suivent :
- le positionnement et l'alignement d'une fibre optique (8) dans une rainure (4) sur un élément d'alignement (1) dans un module optique,
- le positionnement d'un élément de serrage (2) au dessus de la fibre optique sur l'élément d'alignement,
- l'enfoncement de l'élément de serrage en vue d'un engagement dans un premier moyen de fixation sur l'élément d'alignement,
- l'optimisation de la distance entre l'extrémité de fibre et un émetteur et/ou récepteur du module optique, et
- l'enfoncement continu de l'élément de serrage en vue d'un engagement dans un second moyen de fixation sur l'élément d'alignement pour fixer la fibre optique dans la rainure sur l'élément d'alignement.

2. Agencement d'alignement et de fixation d'au moins une fibre optique devant un émetteur et/ou récepteur dans un module optique comprenant un élément de serrage (2) en forme de U et un élément d'alignement (1), **caractérisé en ce que** l'élément de serrage (2) en forme de U comprend au moins un moyen de fixation (7) agencé en paires sur chaque extrémité de l'élément de serrage, et **en ce que** l'élément d'alignement (1) comprend au moins une rainure (4) pour une fibre optique (8) agencée sur le côté supérieur et au moins deux moyens de fixation (5A, 5B) correspondant au moyen de fixation (7) agencé sur les côtés d'élément de serrage (2) de l'élément d'alignement (1) en vue de fixer l'élément de serrage en deux positions différentes.

3. Agencement selon la revendication 2, **caractérisé en ce que** ladite rainure (4) est en forme de v.

4. Agencement selon la revendication 2, **caractérisé en ce que** l'élément de serrage (2) comprend une rainure (6) pour une fibre optique (8) qui est directement opposée à la rainure (4) agencée sur l'élément d'alignement (1) lorsque l'élément de serrage (2) est placé sur l'élément d'alignement (1).

5. Agencement selon la revendication 3, **caractérisé en ce que** lesdites rainures (4, 6) sont en forme de v.

6. Agencement selon la revendication 2, **caractérisé en ce que** les moyens de fixation (5) de l'élément d'alignement (1) sont en forme de rainures en forme de v et **en ce que** le moyen de fixation (7) de l'élément de serrage (2) est en forme de nervures.

7. Agencement selon la revendication 2, **caractérisé en ce que** les moyens de fixation de l'élément d'alignement (1) sont en forme de nervures et **en ce que** les moyens de fixation de l'élément de serrage (2) sont en forme de rainures en forme de v.
